# EUROPEAN PATENT APPLICATION

(11) **EP 1 411 443 A1**
(43) Date of publication of application: **21.04.2004**
(21) Application number: 02354165.9
(22) Date of filing: 18.10.2002
(51) Int. Cl.: G06F 17/30

(54) **Context filter**

(71) Applicant: Hewlett Packard Company, a Delaware Corporation, Palo Alto, CA 94304 (US)
(72) Inventor: Marel, Stephanie, 31100 Toulouse (FR); Brebner, Gavin, 38410 St. Martin D'Uriage (FR)
(74) Representative: Lloyd, Richard Graham

(57) **Abstract**

The invention relates to service delivery, for example, in the context of mobile user interface devices. In particular, the invention describes methods for matching structured descriptions where the structured descriptions specify aspects or attributes of the requestor and/or the requestors' environment or context as well as the available services. The process includes the steps of detecting a context detecting the environment in which the matching is to occur, matching the detected context to a concept list appropriate to the detected context, using the concept list to transform the one or more structured descriptions into reduced structured descriptions, matching the one or more reduced structured descriptions; and providing an output representing the matching between the structured descriptions. This allows for simplification in matching process which reduces bandwidth requirements as the services requested or accessed are reduced depending on the requestors context. Other embodiments take into account ontology mismatch between the entities which are being matched. Examples of applications of the invention are in the context of a user requesting net-based services. According to the invention the choices offered to the user are efficiently and quickly reduced in order to eliminate those which are irrelevant to the users context. Context detection proceeds concurrently with the request or matching process and will accurately reflect a dynamically changing user environment.

## Description

### Technical Field

The present invention relates to matching concept description trees and methods by which concept matching can be simplified. More particularly, although not exclusively, the invention relates to the provision of context-adapted services to an end user in view of the end users requirements. Even more particularly, although not exclusively, the invention relates to methods and apparatus for modifying structured descriptions of potential user concept sets in such a way that the structured descriptions are dynamically configurable according to extrinsic context and therefore amenable to simplification prior to a process of concept matching or correlation.

### Background Art

With present growth rates in mobile phone and PDA market penetration, it is estimated that in the next two to three years there will exist more mobile phones and mobile communications systems than personal computers. Many of these devices are WAP enabled and with the emergence of hybrid devices encapsulating PDA and communications functionality, the possibility of a true mobile information society is becoming a reality. This is stimulating new ways of thinking about the provision of services and the development of new paradigms in the context of interaction between users and sources of data as well as means of effectively locating and accessing resources.

At a generalised level, the present invention is concerned with methods for matching context-filtered structured concept lists in order to efficiently identify related or relevant concepts. Techniques such as these are particularly suited to applications such as web resource provision which take into account a users environment. Here, the users environment is interpreted to mean parameters such as physical location, activity and considerations of hardware limitations. This last aspect is likely to be particularly important where resources are to be delivered to a PDA or similar hybrid devices which have only limited screen real estate.

One solution to this problem has been to develop systems which provide subsets of web resources which are tailored to the users requirements or context. In the web context, this has been done using a variety of methods including user profiles and similar. In the general case, these techniques have involved developing detailed concept structures appropriate to the user and attempting to search for relevant resources based on that user data.

For example, a user searching for a travel booking may need to enter detailed information which is then lexically matched with all available resources. The user must then make further selections. This procedure is based on an inherent concept tree reflecting the structure of both the users data and the resource data which is not capable of articulation to the matching system. Usability and degree of complexity can be a limiting factor in such a resource matching process. For applications such as these to be effective, it is necessary to develop a paradigm for simplify the concept matching process.

It is therefore an object of the present invention to provide a new and improved method and system for concept tree matching which is adapted to the users context. It is an object to do this particularly in the context of resources matching. It is a further object of the invention to provide a method of filtering resources in response to context detection and based on structured constraints imposed by the user.

### Disclosure of the Invention

In one aspect the invention provides a method of matching one or more structured descriptions including the steps of:
- detecting a context reflecting an environment in which the matching is to occur;
- matching the detected context to a concept list appropriate to the detected context;
- using the concept list to transform the one or more structured descriptions into reduced structured descriptions;
- matching the one or more reduced structured descriptions; and
- providing an output representing the matching between the structured descriptions.

The concept list preferably corresponds to a structured list of concepts and keywords related to a specified context.

Preferably one or more of the structured descriptions is reduced by matching keywords in one or more of the structured descriptions with keywords in the concept list and the removing any unmatched keyword concepts from the corresponding structured description.

Preferably the context determination is based on measurement of a physical location in which the matching is to occur, direct reception of data indicating the context or statistical analysis of characteristics of the environment in which the matching is to occur.

In an alternative aspect, the invention provides a method of simplifying a structured description including the steps of:
- detecting a context reflecting an environment in which the simplification is to occur;
- matching the detected context to a concept list appropriate to the detected context;
- using the concept list to transform the one or more structured descriptions into reduced structured descriptions.

The concept list preferably corresponds to a structured list of concepts and keywords related to a specified context.

One or more of the structured descriptions is preferably reduced by matching keywords in one or more of the structured descriptions with keywords in the concept list and the removing any unmatched keyword concepts from the corresponding structured description.

Preferably, the transformation process preserves relevant hierarchical structure in the structured description by pruning the keyword tree to remove unmatched keywords while preserving the remaining structure of the description.

One or more of the structured descriptions and the concept list may be defined according to dissimilar ontologies, in this case, the method further includes the steps of converting one or more of the structured descriptions and the concept list to a common ontology prior to matching or reduction of the structured descriptions.

In an further aspect the invention provides a computer system adapted to carry out the method as hereinbefore defined.

Preferably the computer system for matching one or more structured descriptions includes:
- means for detecting a context reflecting an environment in which the matching is to occur;
- matching means adapted to match the detected context to a concept list appropriate to the detected context stored in a context database;
- an edit engine adapted to use the concept list to transform the one or more structured descriptions into reduced structured descriptions;
- matching means adapted to match the one or more reduced structured descriptions; and
- output means adapted to provide an output representing the matching between the structured descriptions.

### Brief Description of the Drawings

The present invention will now be described by way of example only and with reference to the drawings in which:
- Figure 1:: illustrates a simplified context detection and ConceptList matching scenario;
- Figure 2:: illustrates a flowchart representing the operation of an Edit Engine in the process of reducing the scope of a Description;
- Figure 3:: illustrates a dataflow schematic for a process for updating the context;
- Figure 4:: illustrates a dataflow schematic for a process for modifying a Description;

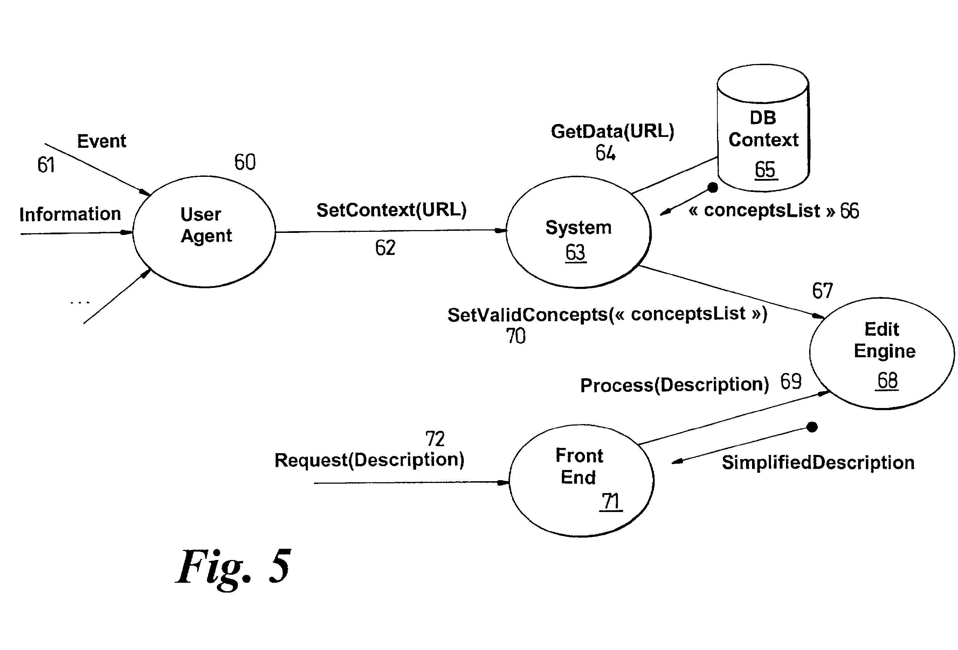

- Figure 5:: illustrates the flow of operations and data in a user request process;
- Figure 6:: illustrates an example of context definition and filtering;
- Figure 7:: illustrates a further example of context definition and filtering
- Figure 8:: illustrates a detailed description of a generalised process for context filtering; and
- Figure 9:: illustrates an example of generating a comparison profile.

### Best Mode for Carrying Out the Invention

At its most general level, the goal of the present invention is to allow the efficient matching of structured concept sets. The invention may be extended to an arbitrary number of concept sets. However, for brevity, only pairwise matching will be considered in detail in this description.

A concept set is defined as a group of ideas or definitions which, when considered as a whole, define a Description, D,. For clarity, the uppercase "D" will be used to denote a concept set.

A superficially simple example of concept matching is the task of matching two individuals depending on their personal characteristics. Here, the concept set is the set of ideas or descriptors or labels which define each individual such as age, educational background, spoken language etc. A concept set Dᵢ can be highly complex and will often embody a hierarchy reflecting the concepts differing degrees of importance and the interrelationship between the concepts used in the concept set for the particular matching task.

Matching two such concept sets can be highly complex as often the amount of information that is to be processed and the complexity of each structured concept set is very large.

There is also the added complication of ensuring that when matching two concept sets or descriptions, they share a common ontology. Without this, there is no guarantee that labels denoting ideas within a concept set are consistent between different concept sets. That is, what is understood by an expression or word in one concept set may not necessarily correspond to the same idea in another concept set.

An example of ontological mismatch is where a system tries to match Descriptions D_{*i*} and D_{*i*}, in which the ideas represented in the two descriptions are given in different languages. For example, following the example above, the two individuals Descriptions may be specified in different languages.

Further complexity may be introduced where, for the even the same language, similar or identical words reflect different ideas.

Thus, in a general case the invention may be concerned with two tasks. The first is ensuring that the Descriptions are ontologically consistent and therefore comprehensible to each other. The second is simplifying the process of matching concepts between Descriptions.

A special case can be envisaged where it is assumed that the Descriptions share a common ontology. Therefore, the invention is concerned only with the simplification and matching process. This case will be discussed first.

The invention simplifies the matching process by using the notion of *context* to confine the scope of one or more of the Descriptions in order to simplify the matching process. This part of the process can therefore be thought of in two stages, the detection of the relevant context and the context filtering and matching of appropriate parts of the Descriptions.

For example, consider matching two Descriptions. The first D_{*user*}(travel) defines a users profile as it relates to travel. The second D_{*resource*}(travel) defines a collection of travel resources in the form of a webpage of available resources. Context filtering based on a users travel query in a work context may, for example, lead to web-page personalisation with entirely different content than that which might be produced while in a home context. The different context can be used to constrain the Descriptions and thus the matched result. An advantage of this is that constraining the Descriptions will leads to simplification of the matching process.

Therefore, at one level, the invention relates to how a generalised structured Description can be reduced or simplified according to context. The reduced concept Description can then be used to provide, or be matched with, resources appropriate to a request made in that context. The resources can be similarly reduced according to the detected concept. Thus a Description D can be identified with a user Request given that a Request for a resource can be specified in terms of a structured description of a desired function, resource, or information. An example of this situation can been seen in Figure where 72 corresponds to a Request.

In the following embodiment, context detection consists of the identification by a system of the most appropriate context from a database of predefined contexts, based on a measurement or notification of the users context.

For brevity, the following explanation will not describe in detail the methods used to implement each operation. Initially, only the stages in the process will be described. The system implementing the method is itself a loosely defined entity which can include user interface hardware, remote and local network hardware as well as network and local resources embodying data, information and various capabilities. Specific examples of components of the system will be discussed where appropriate.

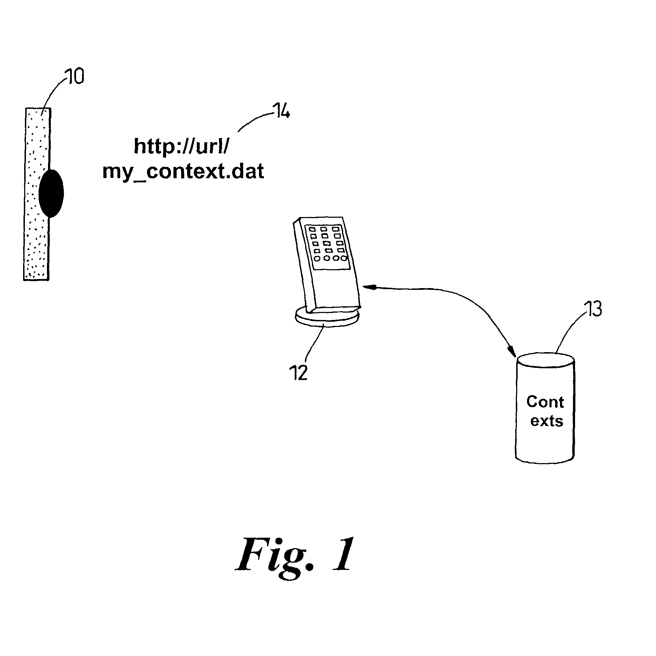

An important step in the overall process is detection of context. A highly simplified example of context detection is shown in Figure 1. This illustrates how a list of concepts and keywords (the ConceptsList) relevant to the detected context may be retrieved from a concept database 13.

Referring to Figure 1, a user carries a PDA 12 which is configured to detect signals 14 notifying the PDA 12 of the users context. In this example the transmitter has limited range and the context is therefore position sensitive. A transmitter 10 outputs a signal which corresponds to a specific url 14 pointing to a concept/keyword file for that context stored in a database 13 which is appropriate for where the signal is detected. Thus, this concept/keyword list relates to the particular context which the users PDA 12 detects at that location.

The PDA 12 is able, by means of IR, wireless or similar, to receive the transmitted context notification. While the context identification signal is shown in the form of a url, the link to the appropriate concept/keyword list may be communicated in another manner, for example by some other form of coded transmission. It is envisaged that there may be a number of ways of detecting user context. More sophisticated systems might include detailed statistical evaluations of context based on an analysis of behaviour patterns of a user combined with some type of external parameter detection. More complicated systems may determine the probability of a user being in a particular context at a particular time. The present invention is considered to include any technique for detecting the users context.

The location-specific context is specified by a url http://url/my context.dat 14 which points to the information in the context database 13 which is used to define concepts associated with that context. For example, the url might be a "home" url, detectable at the users home, which links to a concept/keyword list specifying "homelike" concepts such as eating, entertainment and family matters.

At this stage, we are only concerned with identifying the concepts appropriate to the detected context. The context determination step can be considered as a quite separate communication 'channel' which communicates the context to the Description matching system. Other methods are feasible, however they share a common feature in that they provide the system with a signal which allows the system to recognise the context in which the Description matching process is to occur.

It is now necessary to describe how the context is used and, in doing so, introduce in more detail the idea of a ConceptsList which is used to reduce the scope of the Descriptions which are to be matched.

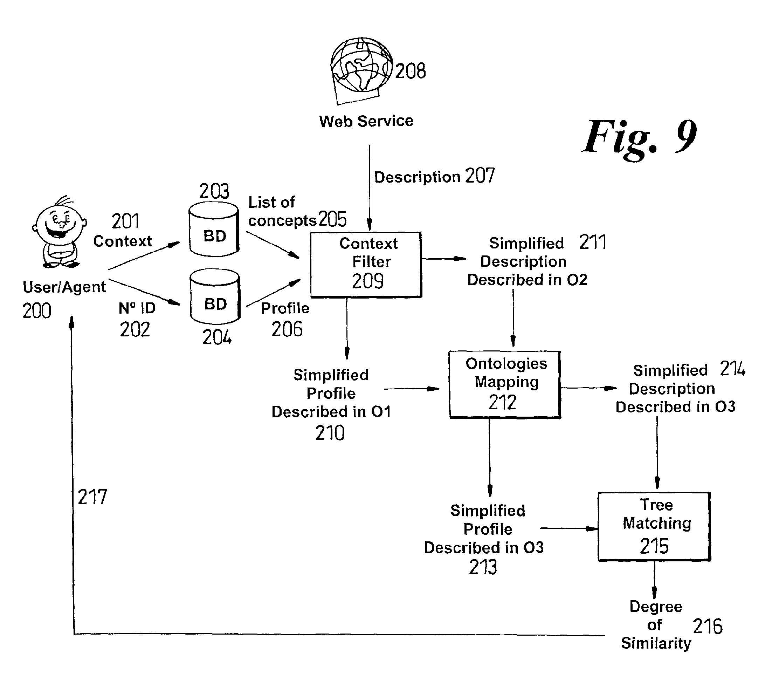

Figure 9 shows a generalised embodiment of the invention whereby two Descriptions D1 and D2 are to be matched. D1 and D2 in this case are files. In this Figure the context detection step is not shown but its result may be functionally identified with the Context Filters 94/95. That is, in Figure 9 the context filters operate with an *a priori* knowledge of the detected context. For clarity, the context communication channel is not shown explicitly. Thus, in this general case, there are three identified inputs, the two Descriptions D1 and D2, 93 and 92 respectively and the Context.

In the first case it is assumed that the Descriptions are ontologically consistent and no lexical mapping is necessary to make the concepts conform in meaning.

Therefore the components 99 and 100 and 101 and 102 in Figure 9 can be ignored for the moment.

The Descriptions D1 and D2 are operated on by the Context Filters 94 and 95. Although these functions are shown symmetrically, this is a generalised case and is illustrated in this way for descriptive clarity. In a real world example the reduction of each of each of the Descriptions may vary significantly in complexity. For example, the Description D 1 93 may correspond to a user profile consisting of a highly complex concept tree describing the users habits, preferences and identity. However, the Description D2 92 may consist of a simple list of travel resources each flagged as "business" or "leisure".

The Context Filters 94 and 95 operates on each of the Descriptions D1 and D2 by filtering out any concepts which are not relevant to the detected context.

Following on from the example discussed above, assuming that the context has been determined as being business-related, the filter 94 may remove all concepts in D1 which are relevant to the users leisure preferences, family data, personal interests and leave only concepts which relate to the users upcoming business meetings, their locations, calendar and any concepts which might be relevant to the process of matching the two concept sets in the business context. The filter 95 removes all concepts in Description D2 which do not relate to business travel. Thus leisure, cut-rate or last-minute travel data may be deleted or 'pruned' from Description D2.

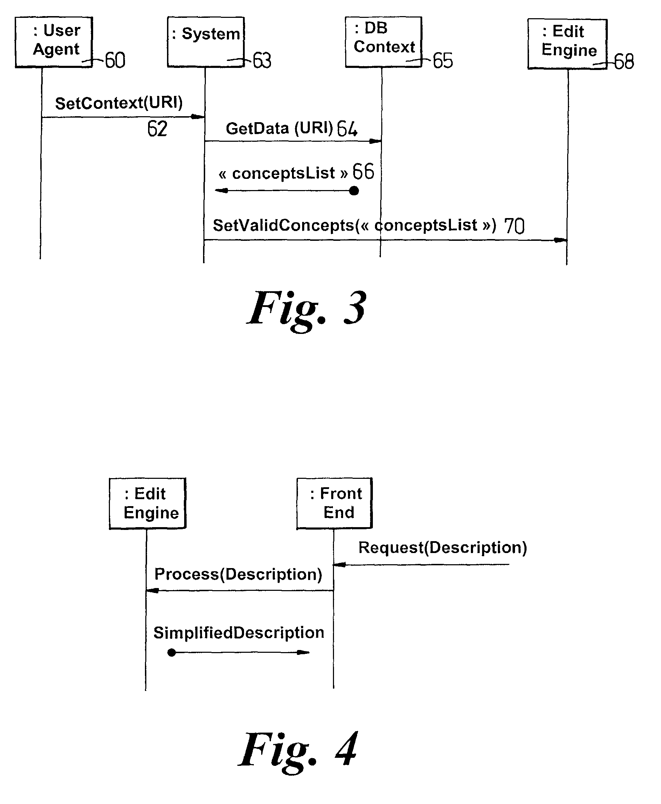

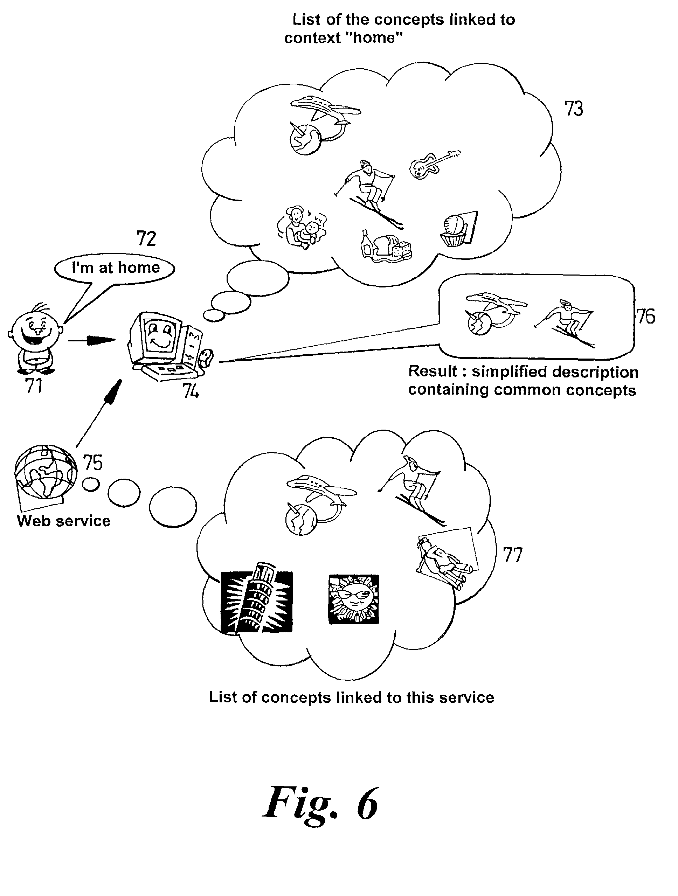

The Descriptions D 1 and D2 are pruned or simplified by means of an Edit Engine 68 shown in Figures 4 and 6.

The Edit Engine 68 does this by deleting data from the Descriptions D1 and D2 based on the list of concept keywords or the ConceptsList which was returned as part of the context detection step. Figures 4 and 6 show how the Context Filter obtains a set of valid concepts. This is SetValidConcepts 70 in Figure 4 and 6, and is used in pruning the Descriptions D1 and D2. This is explained in more detail as follows.

Referring to Figures 4 and 6, the Descriptions D 1 and D2 of Figure 9 can be equated with the users Request(Description) 72 and the 'raw' Resources (not shown) respectively. The resources are the relevant entities which are sought in response to the Request. Semantically, these two elements are considered equivalent to the generalised Descriptions D1 and D2 of Figure 9 as they are entities which are both capable of definition as structured descriptions and can therefore be treated in the same way as before.

For example, a user agent 60 hosted by the PDA in Figure 1, dynamically detects or determines the users context by receiving information from the users environment.

The user agent identifies the context and sends a message SetContext(url) 62 to the system. The system then sends a GetData(url) 64 to the context database 65 and a preconfigured ConceptsList 66 appropriate to the detected context is returned. This ConceptsList 66 includes a list of keywords which are known to be used or are relevant to the detected context. The context database could also return a script which is configured to operate on a structured Description in a way which is appropriate to the detected context.

According to a preferred embodiment, this process of context detection and retrieval of appropriate concept list can occur continuously and independently of the rest of the process. That is, the system as a whole can constantly update the ConceptsList by monitoring the context data or telemetry, retrieving the corresponding ConceptsList from the context database and sending it to the Edit Engine as appropriate to the Descriptions which are being matched.

An example of a structured Description input is shown below.

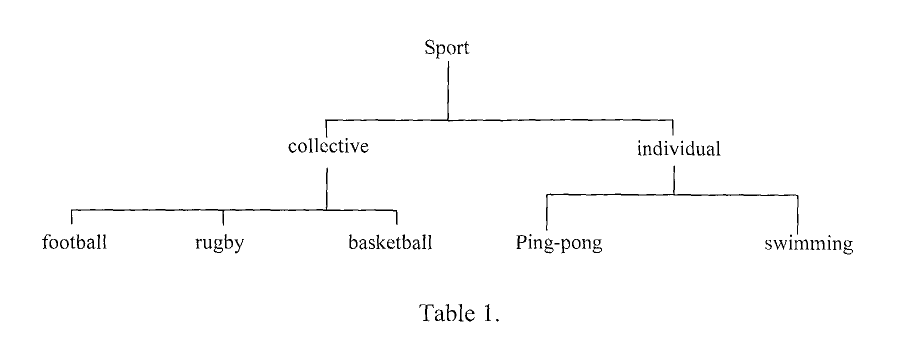

This Description contains a (simplified) hierarchy of ideas and definitions about sport and is broken down into collective and individual sport types. These subtypes are then broken down into specific sports such as football (collective) and swimming (individual). This information is shown in column 1 of Table 2 below.

It is assumed that there exists a pre-configured set of contexts in the context database containing a list of appropriate keywords (linked to concepts). This ConceptList information is shown in column 2 of Table 2 below.

As an aside, the information in the ConceptsList itself can be used in at least two ways. According to the first method, files containing strings may be created and sent to the Edit Engine. Here, the concepts list will be a list of strings. The Edit Engine will contain the functionalities and associated code which is necessary to process the context and description and return the Description result. Alternatively, the message sent to the Edit Engine may itself be an agent which contains context data and the intelligence to use this data to manipulate descriptions. In this case, the agent is hosted by the Edit Engine which would then be a "sandbox" and contain little or no editing functionality. This latter approach is considered more flexible and allows the edit algorithm to be chosen as a function of context.

The ConceptsList content can be compiled manually whereby an expert creates a list of concepts. The list can also be created automatically according to adaptive logic where an intelligent system evolves by learning which concepts and related keywords are relevant to various contexts. Alternatively, or in combination, predefined concepts can be merged to form new concept lists. Also, the concept database can be searched to find concepts which are semantically linked to elements of the particular environment which has been detected.

It is to be noted that concepts do not simply equate to keywords in a one to one mapping. To illustrate this, it is noted that the expression "context" in the present description is defined as a set of concepts which are considered relevant or appropriate to that context. Each concept can be linked to a number of keywords. For example, the concept of "coffee" can be linked to {bean, drink, Java...}. The concept of coffee may be linked with, for example, the contexts of shopping or home.

Semantic linking can be established at varying levels of "concreteness". That is, particular concepts can have a strong semantic link to a particular keyword or a weak semantic link to a keyword. For example, the concept of "coffee" may have a very strong semantic link to the keyword {espresso}, while "coffee" may have a weak semantic link to the keyword {drink}.

This can be envisaged intuitively by considering the reverse determination of the concept from the keyword where, depending on the degree of freedom in the choice of reverse superset definition of the semantic concept, this can lead to concept definition at varying degrees of accuracy.

In the presently simplified embodiment, each concept is linked with only one keyword. This is intended to be illustrative only as any practical system would have many keywords for different concepts.

Returning to the scenario discussed above, the structured Description and ConceptList keywords are shown in table 2 below. The first column lists the keywords of a Request(Description) 72 in Figure 6. The second column lists the keywords contained in a "ConceptsList" 66 returned in response to detecting the particular context "home".

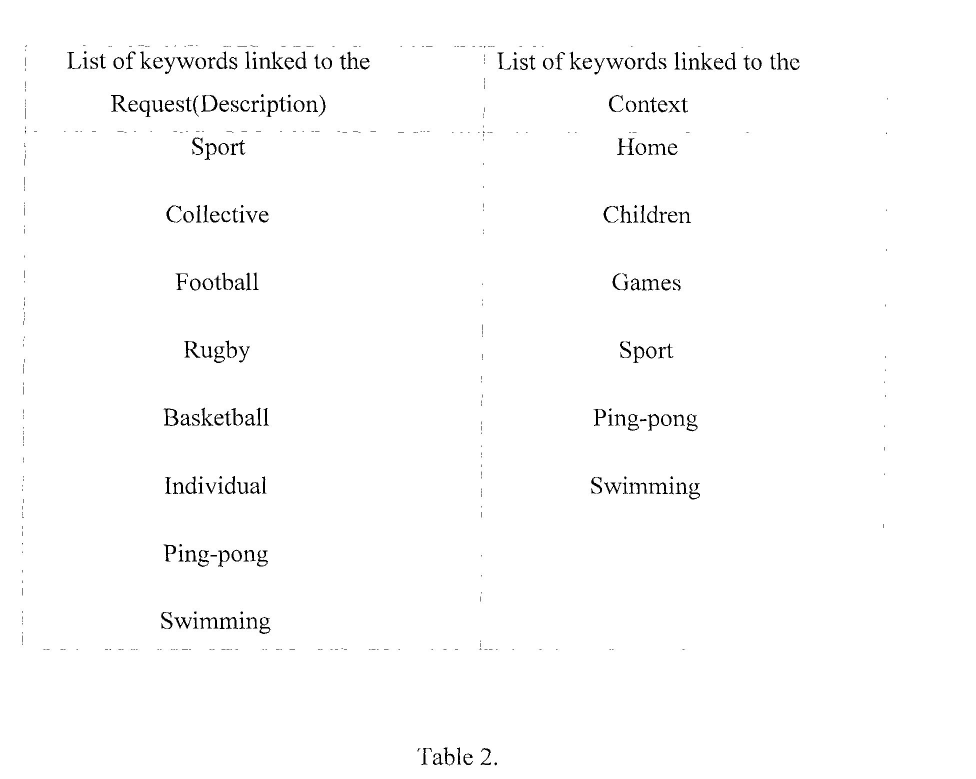

Although a straightforward example is shown above, the concept lists may be substantially more complex and incorporate differing hierarchies and underlying meanings with a range of relevancies.

Pruning is then done by mapping keywords in the ConceptsList which are permitted to remain, with corresponding keywords in the Description. The process is shown in detail in Figures 4 and 6 and can be thought of as complimentary to Figure 9. A key element of the invention is the ability to simplify or edit those parts of a structured Description which are linked to a context as articulated by the list of concepts/keywords. This defines a situation or environment which is appropriate and hence useful in the users context.

The Edit Engine compares context-sensitive ConceptsList keywords with Request(Description) keywords and flags common items. It then generates a 'pruned' Description made up of a reduced list of concepts/keywords as shown below. This is the process by which a detected context is used to simplify a structured Description. Matching two structured Descriptions would involve reducing the two Descriptions and then carrying out a matching process.

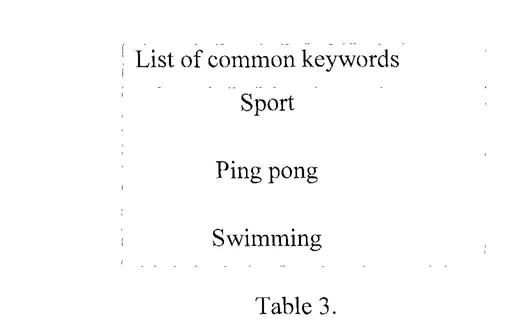

This corresponds to a simplified, or "pruned" simplified structured description shown in Table 4.

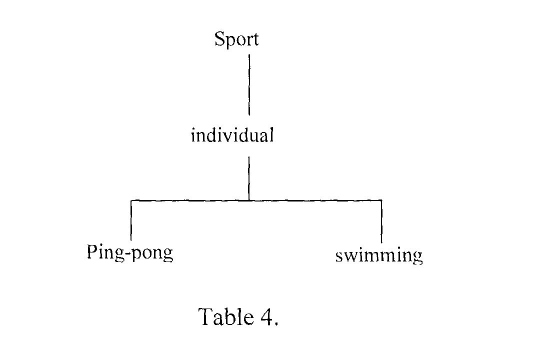

Thus all parts of the Description that have not been flagged as relevant are pruned and all irrelevant links removed. This will result in a restructuring of the remaining nodes in the hierarchy.

The result is that this simplified Description can then be more easily used in matching with another Description which itself has been simplified according to the context determination.

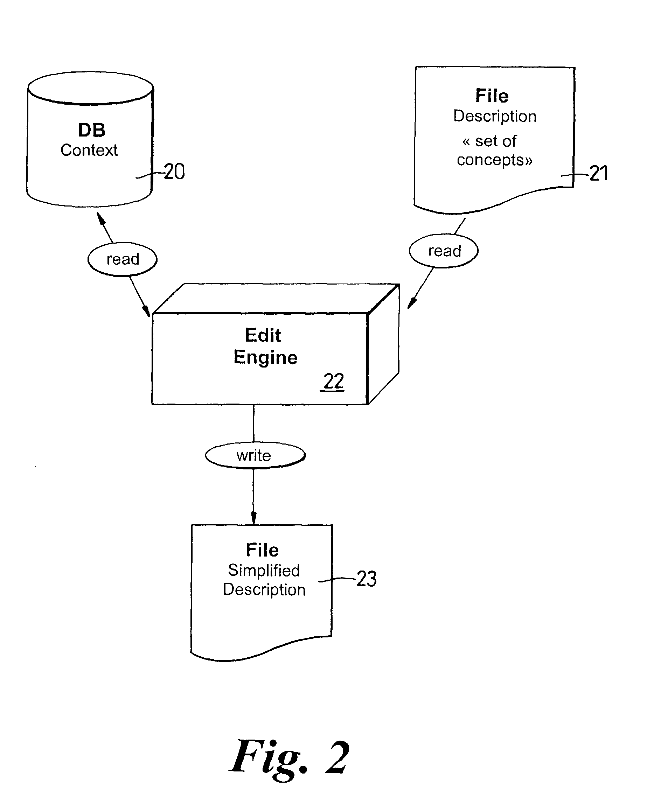

A schematic procedural outline of this process is shown in detail in Figure 2. The input is the structured context-sensitive ConceptsList which is returned from the database 20 and the Request(Description) 21. This description normally has some form of hierarchical tree structure and may be described using XML or similar. Each node of the tree is a concept so the file can be thought of as a set of concepts.

The Edit Engine prunes nodes from a structured description. In this example it takes as input the initial Request(Description) and the list of context-sensitive keywords which are to remain after pruning. Thus, the Description is confined to the particular detected context. The structured output is the simplified description and corresponds to a tree structure where only concepts relevant or appropriate to the context have been kept along with the basic hierarchy. A dataflow diagram for this process is shown in Figure 4 where the Request(Description) is reduced by the Edit Engine thereby returning the simplified Description.

Returning to the more general case shown in Figure 9, the reduced concept sets or Descriptions D1' and D2' are then correlated 96 to find matching terms. The specific form of this matching step will depend on the particular query, operation or task which is required. The output of the process is a file representing the degree of similarity between the two Descriptions 103.

This can be then used by the user front end, via a suitable interface, to provide the appropriate resources to the user.

As alluded to above the Descriptions D1 and D2 may not share a common ontology. In this case, the process can be modified as follows.

Referring again to Figure 9, we assume that the Descriptions D1 and D2 have different ontologies. In such a situation, the process of matching via tree mapping can produce arbitrary results. This is because the simplified Descriptions D1' and D2' may not admit to sensible mappings between what superficially appear to be like concepts. In a lexical mapping process unless the system knows that D1 and D2 share a common ontology there is no guarantee that lexical referents will in fact have the same meaning between the two compared branches of the matching process. For example, an occurrence of the word "voyage" in D1 where D1 is in English may not carry the same ontological significance as the word "voyage" in D2 where D2 is in French.

Therefore, ontological mapping 99 and 100 is performed on the simplified file Descriptions. That is, one or both of the Descriptions are transformed so that lexical entries in the files carry the same meaning. This step could also be performed prior to the Context Filtering stage as this could simplify the need for concept sensitive database entries in a plurality of ontology's. Ontological transformations will be discussed further below in the context of Figure 10.

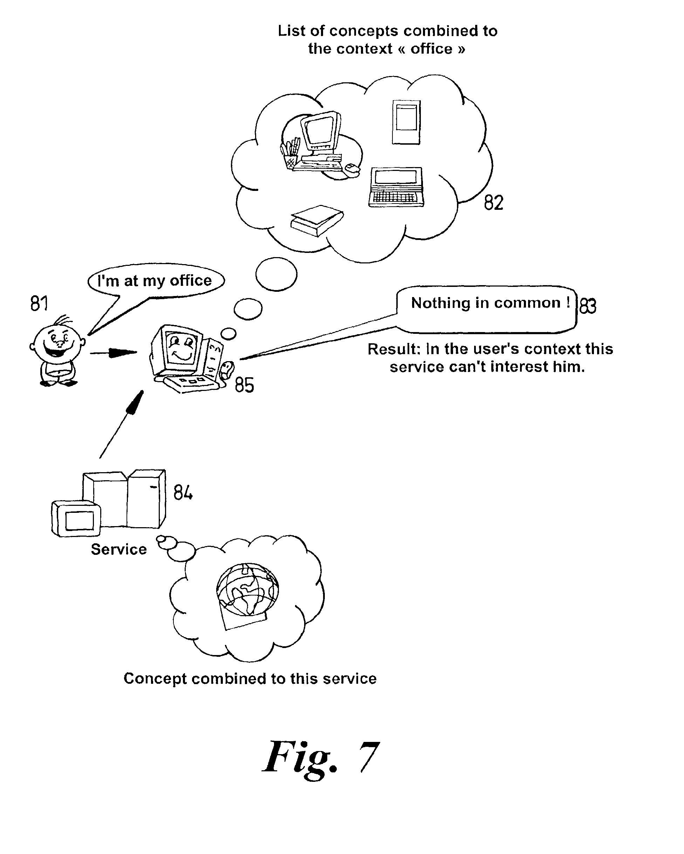

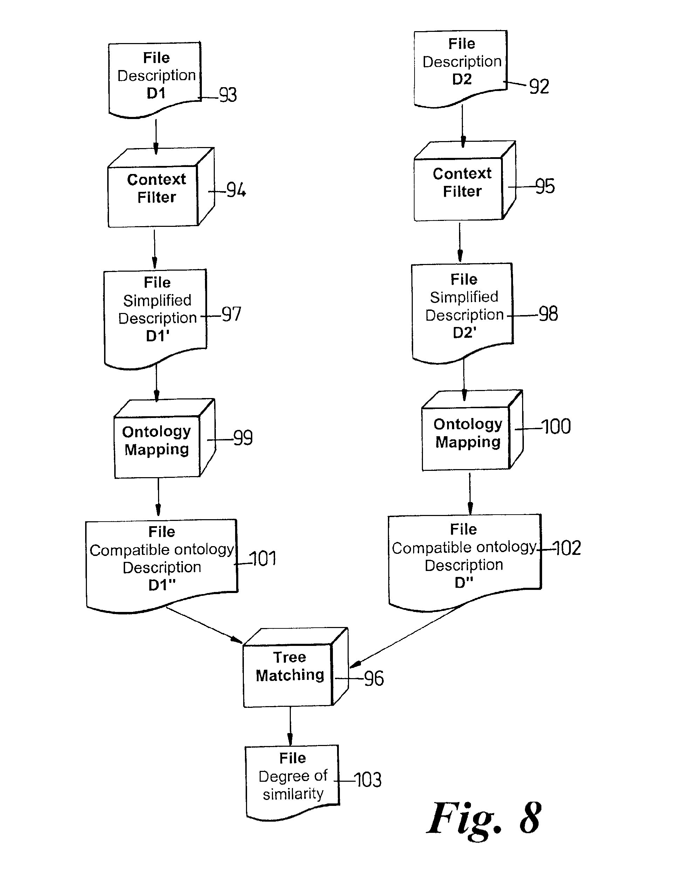

Two simplified examples of the invention are shown in Figures 7 and 8. In Figure 7, a user 71 transmits an "at home" context 72 to the system 74. This immediately specifies the context-sensitive ConceptsList 73 which is appropriate to that context. The Request(Description) here corresponds to the list of concepts 77 linked to a web service 75. Without any context information, these concept sets would need to be correlated by trying to match like concepts. In the simple example shown in Figure 7, this may be trivial. However, in more complicated situations the two concept sets may contain vast quantities of information linked semantically and hierarchically to many definitions and have many subtle variations in terms of relevance.

Referring again to Figure 7, the "home" context causes the ConceptsList 73 to be returned. As there is no specific Description to be matched, the system matches the entire contents of the ConceptsList to the concept set "known" to the web service. In this simplified example a one to one mapping is found between the concepts shown in 76 and this simplified Description 78 is returned to the user for further selection.

Figure 8 shows a user 81 who is in the work context. The system 85 retrieves a "work" ConceptsList list 82 from the database and attempts to prune it based on the resources Description 84. As no common concepts are found the resulting pruned list 83 is empty. In that context there is nothing which is relevant to the user.

Another example is the comparison of a profile to a service is shown in Figure 10. This example also illustrates ontology mapping.

In this example, a User/Agent 200 supplies context 201 and a profile ID 202 to the system. The task is to match the profile with the available services. The context filter 209 receives from the database a ConceptsList 205 relevant to the detected context. and operates on the profile 206 as outlined above, to produce a simplified profile 210. This profile 210 is described according to ontology O1. The context filter 209 also operates on the Description embodying the Web Services 208 which is provided and thus reduces the Description 207 in view of the detected context 201. This produces a simplified Description 211 which is described according to ontology 02. A mapping is carried out based on a common ontology 03 to transform these outputs so that they are described in the common ontology 03.

The Simplified Description in 03 214 and Simplified Profile Described in 03 213 are then matched and a file 216 specifying the matching terms is output and returned to the user interface and hence to the user.

In some embodiments the function of the Context Filter 209 may require some ontology mapping prior to the filtering operations. This will depend on the precise format and ontology under which the context filter operates.

As can be seen, the invention provides a means to substantially simplify and enhance the generalised process of Description matching. Many applications exist for this technique including delivery of web services to mobile users. In this situation the amount of data sent to the user, potentially over a low bandwidth link, can be minimised while at the same time ensuring that the service delivered is appropriate to the users request and context. The invention can also be applied to the general task of Description matching and therefore may have very wide application in a range of fields. Practically, the invention may be implemented as part of a distributed network with the functional aspects performed by remote servers interacting with end-user devices which provide context information as well as Description or Request input. Thus the invention is also directed to a method and apparatus for facilitating such a process over a distributed computer system where such facilitation may be administered from a central location being responsive to input data relevant to the matching task.

Although the invention has been described by way of example and with reference to particular embodiments it is to be understood that modifications and/or improvements may be made without departing from the scope of the appended claims.

Where in the foregoing description reference has been made to integers or elements having known equivalents, then such equivalents are herein incorporated as if individually set forth.

## Claims

1. A method of matching one or more structured descriptions, the method including the steps of:
a. detecting a context reflecting an environment in which the matching is to occur;
b. matching the detected context to a concept list appropriate to the detected context;
c. using the concept list to transform the one or more structured descriptions into reduced structured descriptions;
d. matching the one or more reduced structured descriptions; and
e. providing an output representing the matching between the structured descriptions.

2. A method of matching one or more structured descriptions, the method including the steps of:
a. detecting a context reflecting an environment in which the matching is to occur;
b. using the detected context to transform the one or more structured descriptions into reduced structured descriptions;
c. matching the one or more reduced structured descriptions; and
d. providing an output representing the matching between the structured descriptions.

3. A method as claimed in claim 1 or 2 wherein the concept list corresponds to a structured list of concepts and keywords related to a specified context.

4. A method as claimed in claim 1 or 3 wherein one or more of the structured descriptions is reduced by matching keywords in one or more of the structured descriptions with keywords in the concept list and the removing any unmatched keyword concepts from the corresponding structured description.

5. A method as claimed in any preceding claim wherein the context determination is based on measurement of a physical location in which the matching is to occur, direct reception of data indicating the context or statistical analysis of characteristics of the environment in which the matching is to occur.

6. A method of simplifying a structured description including the steps of:
a. detecting a context reflecting an environment in which the simplification is to occur;
b. matching the detected context to a concept list appropriate to the detected context;
c. using the concept list to transform the one or more structured descriptions into reduced structured descriptions.

7. A method as claimed in claim 6 wherein the wherein the concept list corresponds to a structured list of concepts and keywords related to a specified context.

8. A method as claimed in claim 7 wherein one or more of the structured descriptions is reduced by matching keywords in one or more of the structured descriptions with keywords in the concept list and the removing any unmatched keyword concepts from the corresponding structured description.

9. A method as claimed in claim 7 wherein the transformation process preserves relevant hierarchical structure in the structured description by pruning the keyword tree to remove unmatched keywords while preserving the remaining structure of the description.

10. A method as claimed in either claim 1 or 6 wherein one or more of the structured descriptions and the concept list are defined according to dissimilar ontologies, the method further including the steps of converting one or more of the structured descriptions and the concept list to a common ontology prior to matching or reduction of the structured descriptions.

11. A method as claimed in either claim 2 wherein one or more of the structured descriptions are defined according to dissimilar ontologies, the method further including the steps of converting one or more of the structured descriptions to a common ontology prior to matching or reduction of the structured descriptions.

12. A computer system adapted to carry out the method as claimed in any of claims 1 to 11.

13. A system for matching one or more structured descriptions including:
a. means for detecting a context or receiving a detected context, reflecting an environment in which the matching is to occur;
b. matching means adapted to match the detected context to a concept list appropriate to the detected context stored in a context database;
c. an edit engine adapted to use the concept list to transform the one or more structured descriptions into reduced structured descriptions;
d. matching means adapted to match the one or more reduced structured descriptions; and
e. output means adapted to provide an output representing the matching between the structured descriptions.

14. A method of facilitating the matching one or more structured descriptions, the method including the steps of:
a. receiving a detected context reflecting an environment in which the matching is to occur;
b. matching the detected context to a concept list appropriate to the detected context;
c. using the concept list to transform the one or more structured descriptions into reduced structured descriptions;
d. matching the one or more reduced structured descriptions; and
e. providing an output representing the matching between the structured descriptions.
